# EUROPEAN PATENT APPLICATION

(11) **EP 2 538 386 A1**
(43) Date of publication of application: **26.12.2012**
(21) Application number: 12173371.1
(22) Date of filing: 25.06.2012
(51) Int. Cl.: G06Q 50/18, G06Q 10/10

(54) **System and method for electronic contracting between remote parties**

(30) Priority: 23.06.2011 US 201161500340 P
(71) Applicant: Feldbau, Michael, 53225 Givatayim (IL)
(72) Inventor: Feldbau, Michael, 53225 Givatayim (IL)
(74) Representative: Dr. Graf & Partner AG

(57) **Abstract**

Embodiments of the present invention provide a method carried out by an intermediary through an electronic contracting system, for establishing a remote electronic contract between a first party and a second party, comprising: receiving distinguishing information indicative of the first party's identity; receiving a document; establishing first party's acceptance of the document; generating a certificate of acceptance of the document; and sending the certificate of acceptance to at least one of the parties. A remote electronic contracting system, according to embodiments of the present invention may comprise at least a first communication device associated with a first party; at least a second communication device associated with a second party; and an electronic contracting unit associated with an intermediary; the first and second communication devices and the electronic contracting unit are connectable through a network, and wherein said electronic contracting unit is adapted to receive at least one document and an acceptance indication of said document and generate a certificate of acceptance.

## Description

### BACKGROUND OF THE INVENTION

As the electronic era has emerged, more and more transactions are performed remotely, either electronically on-line using the Internet, or telephonically, between one party, such as a client and another party, such as a seller of goods, a landlord or a service provider, resulting in electronic contracts. For clarity and simplicity purposes, in this application, one party of a contract will be referred to as a client and another party of a contract will be referred to as a company. It would be appreciated, however, that each of the parties of a contract may be any entity that may engage in a contract.

Usually the company offers to provide the client with some services for certain consideration, and the client needs to accept the offer. Establishing acceptance is a fundamental requirement in contract formation, and is frequently carried out using the client's signature.

A signature on a document generally indicates the signer's agreement to the document's contents, and his intention to accept it. A signature is intended to provide the following results and effects:

**Authenticity -** the signer's identity can be established.

**Non Repudiation -** the signer cannot deny his signature and claim that somebody else has signed the document, or claim that the document he signed was different.

**Integrity -** the document cannot be altered after it has been signed.

Handwritten signatures have questionable credibility, since they cannot be associated with the signer; they can be forged; the document can be altered; and the signer can always deny his signature or the signed contents. In contrast, digital signatures indeed overcomes the above listed flaws and disadvantages..

In the electronic era, Digital Signatures have been adopted as an acceptable means for signing remote electronic documents, a fact which has been backed up by accompanying appropriate legislation.

Digital Signatures however involve the construction of a substantial infrastructure and deployment of Digital Certificates, which frequently comprise some secure hardware and accompanying software and involve considerable related costs.

### SUMMARY OF THE INVENTION

Since in real life, the deployment of digital certificates for the purpose of utilization of Digital Signatures is actually very slow, and since there is a strong need for an alternative, more handy method for establishing acceptance of electronic contracts, an alternative approach is described herein, providing equivalent effects and characteristics to those attributed to signatures.

The system and method according to embodiments of the present invention, provide a substantially equivalent alternative to contract signing using digital signatures.

According to embodiments of the present invention, the system and method for electronic contracting may include several components, each providing certain advantages, which may be used individually or jointly, as applicable and suitable for a certain application.

The present invention involves the usage of a disinterested intermediary. The intermediary is generally not associated with the company or with the client. The term "Intermediary" herein can also refer to systems associated or operated by a disinterested party.

According to some embodiments of the present invention, an intermediary may obtain from a client an explicit indication of acceptance of a specific document, and may generate a certificate accordingly. In one aspect of the invention, the client may be provided with one or more codes which he needs to return to the intermediary thereby indicating his intentional acceptance of the document.

The codes are provided to the client by the company and/or by the intermediary in a manner that returning them proves they must have been returned by the client.

Broadly speaking, a method according to some embodiments of the present invention may include the following steps performed in whole or in part by an intermediary:

Providing the client with a document or alternatively receiving the document from the client;

Receiving distinguishing information indicative of the client's identity;

Receiving indication of acceptance of the content of the document from the client;

Generating a certificate accordingly.

In some examples, a method carried out by an intermediary through an electronic contracting system, for establishing a remote electronic contract between a first party and a second party, comprising: receiving distinguishing information indicative of the first party's identity; receiving a document; establishing first party's acceptance of the document; generating a certificate of acceptance of the document; and sending said certificate of acceptance to at least one of said first party and said second party.

According to some embodiments of the present invention a remote electronic contracting system may comprise: at least a first communication device associated with a first party; at least a second communication device associated with a second party; and an electronic contracting unit; wherein said at least first communication device, said at least second communication device and said electronic contracting unit are connectable through a network, and wherein said electronic contracting unit is adapted to receive at least one document and an acceptance indication of said document and generate a certificate of acceptance.

In further embodiments, the electronic contracting unit may comprise: an input device; an output device; a display device; a processor; a storage device; a communication module adapted to receive information from at least one remote party and transmit information to at least another remote party; a document module adapted to receive at least one document to be accepted by said first party and to present said at least one document to said first party upon request; a client identity module adapted to receive distinguishing information from said first party, compare received distinguishing information with pre-obtained and pre-stored information associated to said first party, and verify the identity of said first party; a client acceptance module adapted to receive an indication of acceptance of a document received at said document module; to generate a code and to send said code via said communication module, to said first party upon receipt of indication of acceptance from said client ; and a certificate generation module adapted to generate a certificate of acceptance and send said certificate to at least one remote party via said communication module.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. 1A is an information flow diagram of a method according to an embodiment of the present invention;

Fig. 1B is a flowchart of a method according to an embodiment of the present invention.

Fig. 2 is a block diagram of a general architecture of a electronic contracting system according to an embodiment of the present invention;

Fig. 3 is a block diagram of an electronic contracting unit according to an embodiment of the present invention;

Figs. 4 and 5 are examples of screen shots of user interface during authentication and acceptance processes according to an embodiment of the present invention;

Fig. 6 is an example of certificate provided by an intermediary according to one embodiment of the present invention; and

Fig. 7 is a block diagram of an exemplary computing device according to an embodiment of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

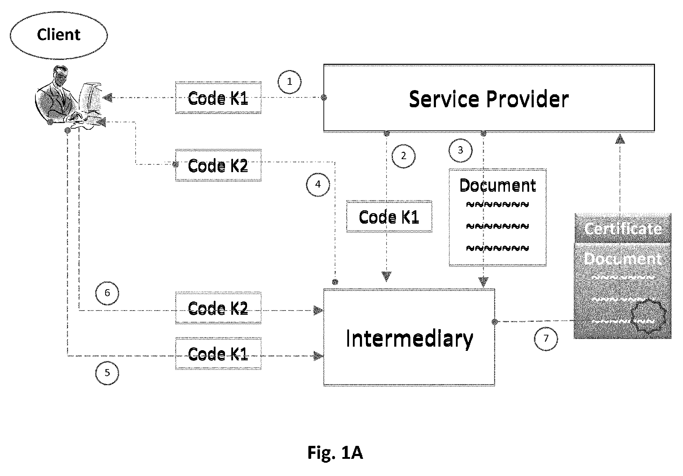

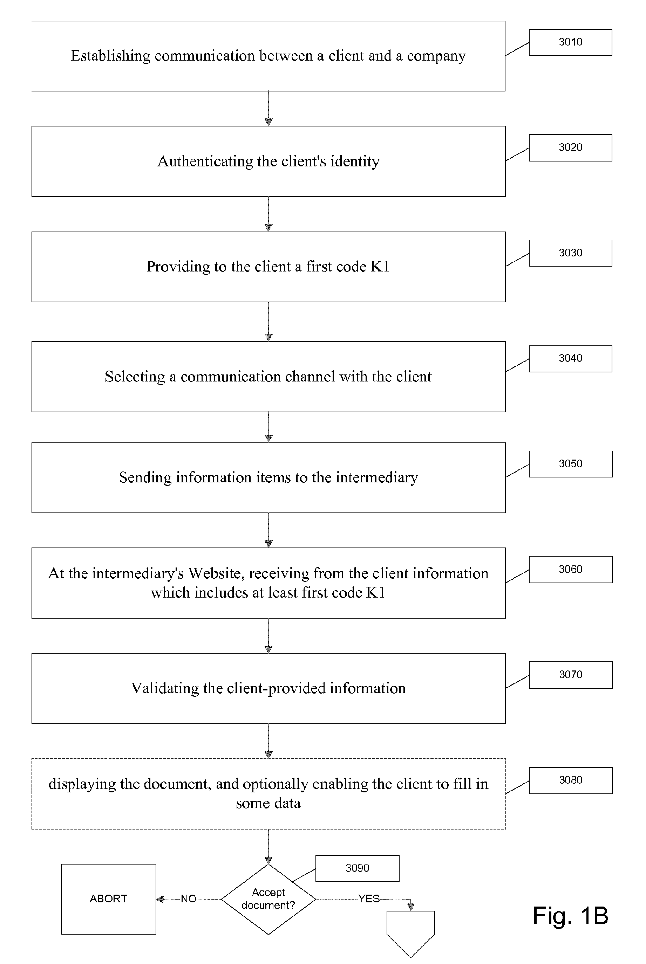

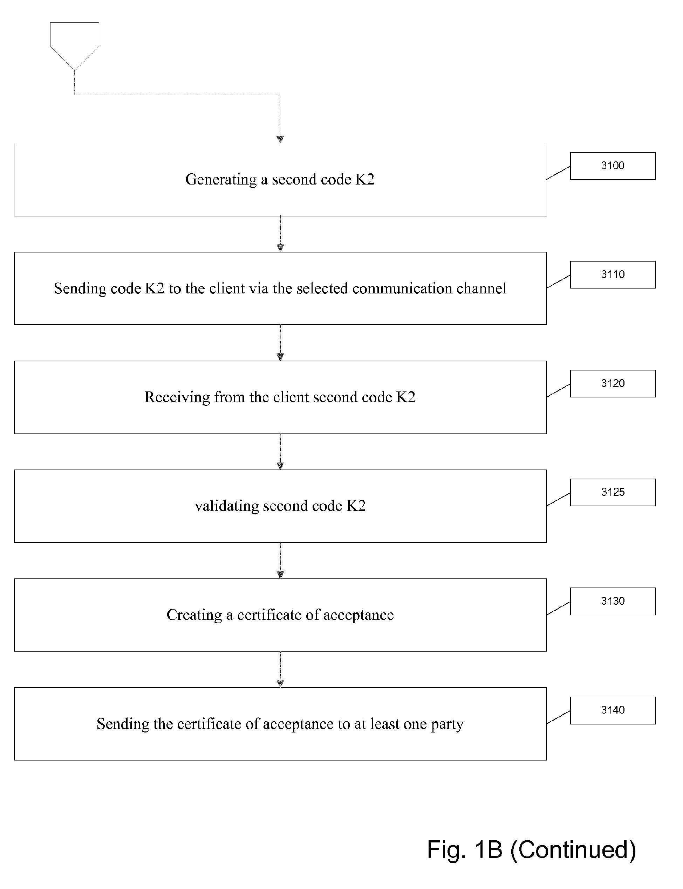

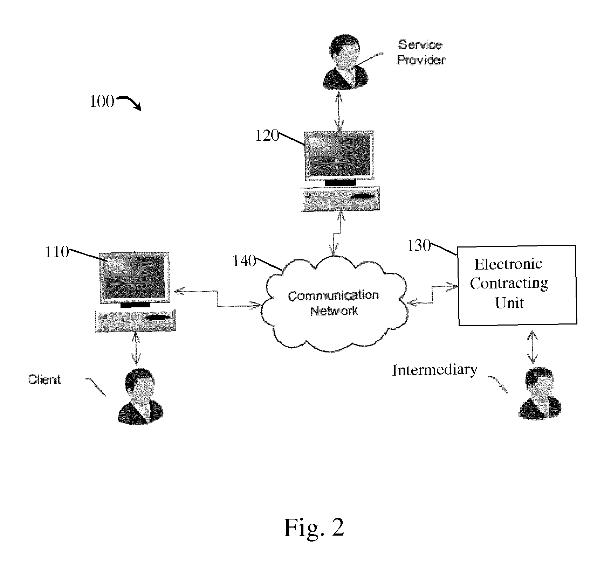

Fig. 1A illustrates information flow through electronic contracting system (100 in Fig. 2). Fig. 1B is a flowchart of a method according to an embodiment of the present invention. With reference to Figs. 1A and 1B, according to embodiments of the present invention, a method for electronic contracting may comprise the following steps.
a) Establishing communication between a first party, such as a client and a second party such as a company [block 3010]; the communication between the client and the company may be initiated by either party, and may be established through any communication channel, such as a company's website, via the telephone, or by any other known communication channel, in order to acquire or offer some services or goods;
b) Authenticating the client's identity [block 3020]. The authentication of the client's identity may for example comprise receiving authentication information from the client that is only known to the client.
c) The client needs to sign a document, such as a contract or agreement, in order to acquire the requested services or goods.
d) Providing the client with a first code K1 [1 in Fig. 1A and block 3030 in Fig. 1B]. Code K1 may be provided to the client via the company's website, on the telephone or via any other communication channel known in the art.
e) Selecting a communication channel through which information can be exchanged with the client, for example email, telephone, fax etc. and receiving from the client the details of such a selected communication channel (e.g., an email address or telephone number) [block 3040].
f) Sending information items to the intermediary [block 3050], which may include one or more of the following items :
   i. The document to be signed (3 in Fig.1A)
   ii. The first code K1 (2 in Fig.1A)
   iii. The details of the communication channel selected in step e) above, along with the email address or telephone number, fax number etc., as applicable
   iv. Optionally additional authentication data associated with the client, e.g. driver's license number, passport number, street address, zip code etc.
g) At the intermediary's website, receiving from the client information which includes at least first code K1 provided to the client in step d) above (5 in Fig.1A and block 3060 in Fig. 1B), and optionally other data to be compared against the data which has been passed by the company in step f) above.
h) Validating the client-provided information [block 3070 in Fig. 1B].
i) According to some embodiments of the present invention, the method may further comprise displaying the document, and optionally enabling the client to fill in some data (if the document hasn't been completely filled in yet) [block 3080 in Fig. 1B].
j) Receiving from the client an indication of acceptance or rejection of the document [block 3090]. According to some embodiments of the present invention, the client may click a button indicative of his or hers acceptance or rejection of the document. For example, clicking an "Accept" button to indicate acceptance of the document's contents or clicking an "Exit" or "Abort" button to abort the process.
k) When an indication of acceptance is received by the intermediary, such as when the "Accept" button is pressed by the client, generating a second code K2 (block 3100 in Fig. 1B), and sending code K2 to the client via the selected communication channel received in step f.iii above (4 in Fig.1A and 3110 in Fig. 1B)
l) Receiving from the client second code K2 (6 in Fig.1A and block 3120 in Fig. 1B), sent to the client in step k) above. This can be achieved, for example, by simply typing second code K2 at the intermediary's Website. According to other embodiments of the present invention, the client may send second code K2 via other communication channels, such as by email, by SMS, by fax or by any other communication channel known in the art. According to some embodiments of the present invention, the client may also type some formal acceptance indication such as "I agree", his name, address etc.
m) According to some embodiments of the present invention, after validating second code K2 (block 3125) received from the client in step 1) above, the intermediary may generate and add to the document a chronicle summary of the various events involved with the entire process, as a testimony, and may add a timestamp and digitally sign or otherwise certify the document (block 3130 in Fig. 1B). According to some embodiments of the present invention, the intermediary may secure document from possible forgery. Finally the intermediary may send the signed copy of the document to either or both parties (7 in Fig.1A and block 3140 in Fig. 1B).

It would be appreciated by those skilled in the art that the remote contracting method described above with reference to Figs. 1A and 1B, may produce the following conclusions based on one or more of the steps described above:

The individual who intentionally returned the second code K2 in step 1), explicitly and consciously agrees and accepts the document's contents.

Returning both codes K1 and K2 demonstrates that the individual who agreed to the document contents is the same individual to whom code K1 has been provided by the company in person in step d), after being authenticated in step b). That individual could only be the client.

The client has agreed to the document's contents after having the chance to inspect and/or edit it, since he has pressed the "Accept" button and confirmed it by deliberately typing the second code K2.

The client cannot deny agreeing to the document's contents, since typing codes K1 and K2 - both authenticates his identity and indicates his active, intentional and conscious acceptance of the document's contents.

Once the document is digitally signed by the intermediary in step m), it cannot be altered and there cannot be any dispute over the document's contents.

Anybody reviewing the signed document can later verify the document's contents, and its acceptance by the client - as attested by the intermediary.

The method for electronic contracting as described above, therefore, provides an equivalent alternative to the client's signature on the document. Moreover, it has all the benefits attributed to digital signatures, without the need to manage and deploy keys and certificates.

In block 3010, the client may wish, for example, to acquire a service or change existing service terms. Accordingly, the client may contact the company, for example by phone or using the company's Website.

In the authentication step (block 3020) the client's identity is authenticated. If the client is an existing client, then the company may already have various client's details, such as the client's name, phone number, street address, email address, credit card details, some answers to secret questions etc., which the company can verify, for example, over the phone or if the existing client logs into the company's Website then he may need to enter a username and password, answer a secret question etc. It would be appreciated by those skilled in the art that the authentication step may be conducted via other communication means, such as via email correspondence, SMS and other communication channels known in the art. The client's details may be stored in a storage device of the company's computing and communication device (120 in Fig. 2).

New clients may register and provide authentication data according to the authentication level required by the company. According to some embodiments of the present invention, the client's identity may be verified via his or hers credit card details and/or any suitable identification technique, as long as it is satisfactory and acceptable by the company.

According to some embodiments, after authenticating the client, a verified communication channel shall be established with the client (block 3040), such as a telephone, email, fax, etc. This can be carried out simply by sending a code to the selected communication channel and requesting the client to return it to the company for verification.

According to some embodiments of the present invention, the telephone number or email address may be registered to the client's name so that any communication through these channels can be associated with the client's identity and prevent potential later denial by the client.

It should be noted that in the context of the present invention a code may refer to a series of one or more characters of any type, which for example include, but are not limited to letters, digits, punctuations and other symbols, printable and non-printable as desired. According to one embodiment of the present invention, numerals are used as codes, since they can be easily pronounced orally and conveyed unambiguously to the client.

After the client and the company decide upon the services requested, an appropriate electronic contract ("document") is composed which includes the agreed upon terms and associated consideration. It would be appreciated however, that the document may be a standard contract which is not tailored to a specific client. The client is required to inspect, optionally complete, and accept the document.

After authenticating the client, in step d) above (block 3030) the company may provide the client with a first code K1. Code K1 may be a random combination of characters, for example: AGi2y67990, that would be hard to guess. The client will later be requested to return (e.g. by typing) code K1 as proof of identity. It is appreciated that any information item already associated with the client may serve in order to identify and authenticate the identity of the client, in addition to or instead of code K1. For example, the client's driver's license or credit card number, the client's street address, the client's phone number etc. may be provided by the client in order to verify the client's identity.

The channel selected for communication with the client in step e) (block 3040) may be used later in step k) to communicate second code K2 to the client. It will be appreciated that different communication channels may be used for communicating first code K1 and second code K2.

According to some embodiments of the present invention, a method for electronic contracting may further comprise the step of verifying the selected communication channel details and updating them if necessary. This can be accomplished, for example, by sending a text message to the client using the selected channel and asking the client to return them while he is still on the phone or in the company's website. According to some embodiments, the text message sent may consist of code K1.

Preferably a selected email address should not be of a free service provider such as Gmail™, and a phone should not be a prepaid phone, because it might be difficult to associate them with the client. Nevertheless this is only a recommendation, and the channel selected, and its suitability for the company's needs is application dependent.

In step f) (block 3050) of an exemplary method according to embodiments of the present invention, the company may send several items to the intermediary: the contract document; first code K1 for later authentication of the client; the selected communication channel details, e.g.: telephone or fax number, email address etc.; and optionally additional authentication data, which can assist in authenticating the client by demanding the client to provide some or all of them. The information may be sent for example by email or using any other suitable connection, such as through the Internet.

For example, in addition to the document M, the passed information may include:

| First Code K1 | **AGi2y67990** |
|---|---|
| Phone number | (212) 345-6789 |
| Email address | John_s@biocomp.org |
| Zip code | 32456 |
| Full Name | John Smith |
| Driver's license number | 338765908 |
| Credit Card's last 4 digits | xxxxxxxxxxx-4356 |

The intermediary may temporarily store the received information in a record having the document along with the various data items associated with it. According to some embodiments of the present invention, first code K1 may also serve as an index to identify the record.

It should be noted that some of the information items passed in this step might be confidential, and there might be a need to prevent their disclosure to the intermediary. Information items such as credit card details or user password are examples to such confidential information. For such information items, instead of passing the information item itself, the company may pass a representation thereof, obtained for example by applying a mathematical function to it, such as the Message Digest algorithm 5 (MD5) Hash Function. The same function may be applied to the client's information to transform it before it is returned to the intermediary.

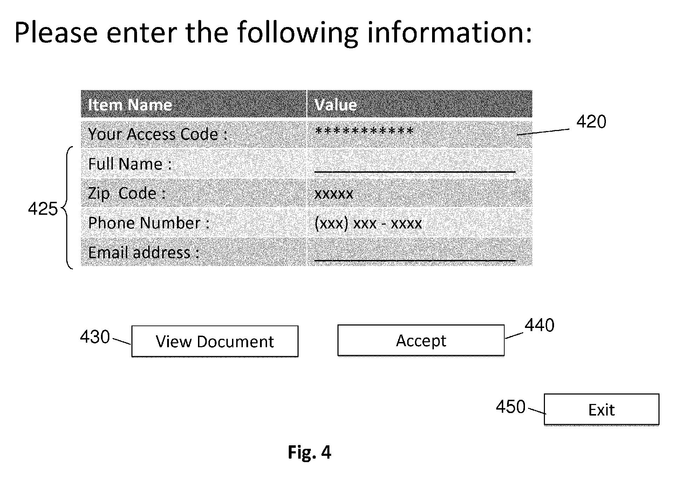

According to some embodiments of the present invention, the client may enter into the intermediary's website, an example of which is depicted in Fig. 4. The client may then provide information including at least first code K1 (access code 420 in Fig. 4 as) that the client has received from the company in step d) above (block 3030), and optionally other data to be validated against the data which has been received by the intermediary from the company in step f) (block 3050). It would be appreciated however that code K1 may be returned to the intermediary via any selected communication channel or in any other manner known in the art.

If, for example, the client provides the correct access code 420 (i.e. first code K1), the temporarily stored record is retrieved and a validation is made (block 3070) between the additional provided information 425 and the authentication data received in step f) (block 3050) and stored at the electronic contracting unit (130 in Fig. 2) of the intermediary. If the validation succeeds, then the document is ready for inspection (and optionally for data entry/editing) by pressing "View Document" button 430 in Fig.4 (block 3080), and finally the document is ready for acceptance.

According to some embodiments of the present invention, when the "Accept" button 440 in Fig.4 is pressed (block 3090), a second code K2 is generated and sent to the client via the selected communication channel (blocks 3100 and 3110), e.g. via Short Message Service(SMS) known also as text messaging, email, fax etc.

According to some embodiments of the present invention, it can be demonstrated that the communication channel through which code K2 is sent, is associated with the individual to whom it is sent in step k) (block 3110), a fact which could augment the process' irrefutability attribute.

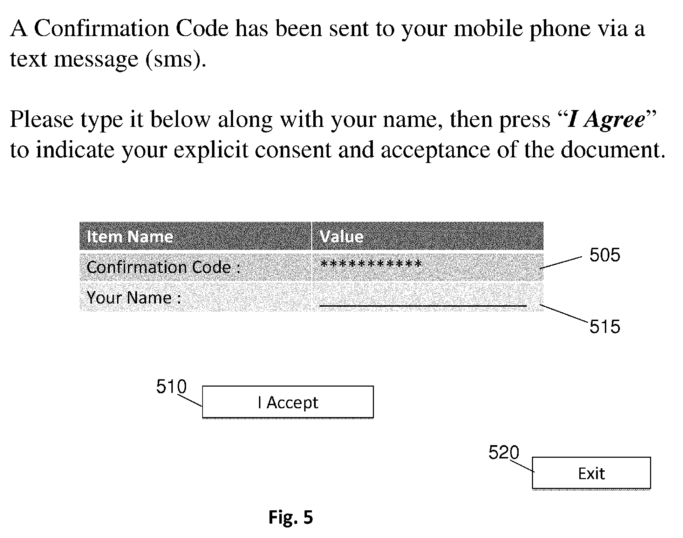

After receiving the code K2, the client returns it in step 1) (block 3120) to the intermediary to indicate the client's intentional acceptance of the document. The code K2 may be entered it in the "Confirmation Code" field 505 (Fig. 5). Preferably, the client name may also be entered in field 515 of Fig. 5 and the "I Accept" button 510 may then be pressed.

It would be appreciated that second code K2 may be returned in any other convenient manner, e.g. by email, a text message, by phone verbally, an automated Interactive Voice Response (IVR) survey system, via fax etc.

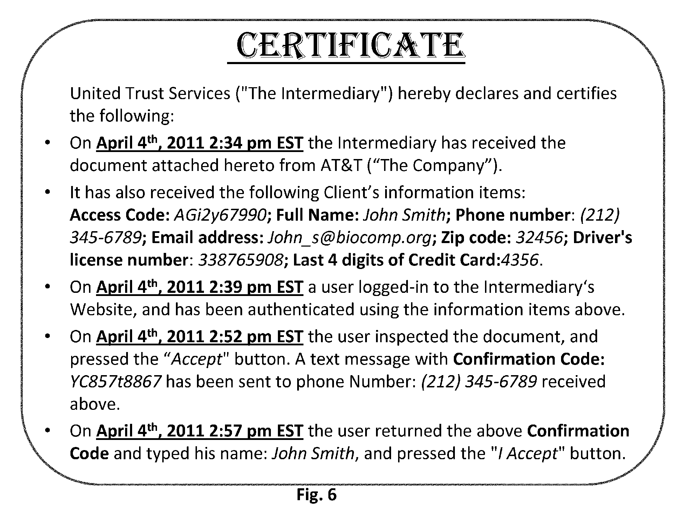

As may be further seen in step m) and Fig. 1B, the intermediary may certify the document by preparing a Certificate which includes at least the document (block 3130). According to some embodiments of the present invention, the intermediary may attach its logo and a chronological log of the various events and data relating to the process as depicted for example in Fig. 6.

Thereafter, the Intermediary may digitally sign the certificate and send a copy to either or both parties. The advantage of certification using a digital signature is that the signer's identity, i.e. the intermediary, can be verified anytime thereby increasing the certificate's credibility. Also, the digitally signed certificate cannot be undetectably modified. However, any other securing method which may prevent potential falsification of the document is acceptable, such as rendering the document Read-Only, digitally timestamping the document (using for example a service such as the one provided by Surety Inc.), or storing a copy (or an equivalent hash thereof, obtained for instance using the MD5 Hash Function) in a secure repository for later verification, and so forth.

In some embodiments, the certificate can be combined with the document or separated thereof, as appropriate, provided they are in linkage with each other. The terms "document" or "certificate" shall refer herein both to the document alone and to the document combined with or accompanied to the certificate.

In some examples, the utilization of either of the codes K1 and K2 is optional and implementation dependent. In some examples, some embodiments of the present invention may utilize code K1 alone, other embodiments may utilize code K2 alone, and yet other embodiments might utilize both or neither, depending on the degree of credibility required for any particular application.

For example, cellular phone or email service providers might choose to utilize code K2 alone, because the cellular phone number or the email address, respectively, are strongly associated with the client, and sending or receiving code K2 to or from them may be sufficient to establish the client's identity. In another case, where for instance parent consent is required, the company provides the parent with code K1 on the phone, and he needs to approve the document detailing the services rendered by entering both codes K1 and K2 in order to acquire certain services or download certain content (code K1 ensures the parent consent because the parent received it on the phone in person). Yet in other applications it might be sufficient to utilize code K1 alone.

In another embodiment of the present invention, the document is sent by the company directly to the client, for example via email. The company also sends the communication channel details (and optionally code K1) to the intermediary, which sends the code K2 to the client via the communication channel.

The client, after optionally editing, returns the document to the intermediary along with code K2 (and optionally code K1), for example via email. The codes may be provided by the client for instance in the email's Subject field. Returning the document along with code K2 clearly indicates the client's explicit and conscious acceptance of the enclosed document's contents. It remains for the intermediary to generate a descriptive certificate including at least the document, digitally sign it and send a copy to both the company and the client.

In yet another embodiment of the present invention, the document is sent by the company directly to the client, e.g. via email, and Code K1 (which has been provided to the client on the telephone), is sent to the intermediary.

The client, after optionally editing the document, returns the document to the intermediary via email along with code K1 in the Subject field. Validating the returned code K1 clearly indicates the client's explicit and conscious acceptance of the enclosed document's contents. It remains for the intermediary to generate a descriptive certificate including the document, digitally sign it and send a copy to both the company and the client.

In yet another embodiment when the "Accept" button (440 in Fig. 4) is pressed, instead of sending second code K2 to the client, code K2 is displayed on screen, and the client must return it to the intermediary via the selected communication channel. The intermediary verifies that the phone number or email address from which the client returned the code K2, matches the selected communication channel details passed to the intermediary from the company.

Another embodiment might even skip the usage of both codes. In one such an embodiment the client may send to the intermediary a code K3 which can be proved to be associated with him and which only the client has knowledge of. Examples for such a code could include the client's credit card number, or the 3 digits Card Verification Code (CVV) on the back of the credit card, a password associated with the client etc. The intermediary generates a certificate that may include the document and the received code K3, digitally signs it and sends a copy to both parties. Sending code K3 to the intermediary establishes the client's intentional acceptance of the document.

In another embodiment, code K3 is a text message sent from the client's telephone, which consists for example of the phrase "I Agree". The intermediary validates the sending telephone number against the phone number received from the company. A positive validation establishes the client's acceptance of the document. A similar embodiment applies utilizing the client's email address instead of his phone.

One embodiment might consist empowering the intermediary to sign the document on behalf of the client. According to Agency Law, the client (also known as the "principal") can authorize the intermediary (also known as the "agent") to act on his behalf. In such case, the intermediary's digital signature on the document shall be considered to represent the client's signature.

It would be appreciated that the company or the intermediary may obtain authentication services from an external, disinterested entity. For example, VISA Inc. the credit card company offers an authentication feature named "Verified by Visa", where the company or the intermediary invokes VISA to authenticate the client.

Alternatively suppose the client is a customer of a bank where he has authenticated access. The company may for example send the document and optionally first code K1 to the intermediary, and require the client to log-in to his bank's Website account where he is authenticated upon entry.

At the bank's Website, the client presses a special button, which transfers him to the intermediary's Website along with some client related authentication indication. The authentication indication might for example consist of the client's name and an Id. Number (e.g. Passport number or driver's license number etc.), preferably signed with the bank's digital signature. At the intermediary's Website, upon positive verification of the authentication indication, the client types code K1 and the intermediary displays the document. After reviewing the document, the client presses the "I Accept" button (510 in Fig. 5). Then the intermediary prepares an appropriate certificate, then digitally signs it, and sends a copy to each party.

Since the client has been authenticated by the bank, pressing the "I Accept" button might be sufficient to establish the client's acceptance of the document's contents. Therefore the usage of either codes K1 or K2 in this case is optional and application dependent. Also, it should be noted that in this case the code K1 has been primarily used to identify the client's specific document at the intermediary's Website. However it would be appreciated that any other convenient method may be used to identify the document.

Also, it would be appreciated that the intermediary could by itself provide the authentication services, for instance in case where the client is a registered member of the intermediary. Moreover, in the context of the present invention the intermediary may consist of a series of one or more disinterested entities, each providing certain tasks or services, which together are considered as provided by an intermediary.

In another embodiment, instead of typing the codes in the intermediary's Website, the intermediary contacts the client via the telephone number provided by the company, and requests the codes, or otherwise request acceptance of the document, either verbally or by requesting the client to key in the codes. This can also be assisted using some automated phone survey systems (IVR surveys) such as Database Systems Corp.'s. In case of an oral conversation, the intermediary may also add a recording thereof to the generated certificate.

It would be appreciated that various mechanisms may be used by which an intermediary collects and documents a series of actions and distinguishing information associated with the client, which are eventually combined to generate credible evidence regarding the client's agreement and acceptance of a document.

Sometimes, the generated evidence does not relate to a specific client, but rather to something that the client is associated with (e.g. something the client has). For example, if the company receives a valid credit card number from the client - then it may be assumed that other details that the client provides (e.g. phone number, email address etc.) are valid and authentic as well, by association to the credit card number, and thereby to the credit card holder.

Also, if for example the client's email address or phone number printed on top of a business card or a formal page, than it may be assumed that they are associated with the client. Similarly for example, if the client is a customer of a telephone company, then it may be assumed that the company knows his phone number, and a text message sent to or received from this number relates to the client, and that fact cannot be denied.

Sometimes the company knows various details about the client, including for example a phone number, an email address and a credit card number, but it can only verify one of these items. It is appreciated that the other information items relate by association to the same individual who owns the verified item.

If a client provides a valid credit card and pays for services rendered, then it is reasonable to consider the phone number or email address he provides to be associated with the client.

In some examples, the contracting method according to embodiments of the presenting invention utilizes an authentication indication provided by some independent credible entity that is acquainted with the individual (such as a bank or a credit card company). The selected authentication strategy is application dependent.

In some examples, the method further comprising: securing said certificate against potential forgery.

In some examples the distinguishing information is received from an entity having the first party registered as a member of the entity.

In some examples, the distinguishing information is received from an entity selected from a group comprising: a second party to a contract, a financial institute, and a disinterested authentication service. According to other embodiments, the distinguishing information is generated by the intermediary, and the first party is registered as a member of said intermediary.

In some examples, the method further comprising receiving from the first party information compatible with the distinguishing information.

In some examples, the step of receiving the distinguishing information from said first party is combined with the step of establishing the first party's acceptance.

In some examples, the method further comprising the step of receiving the details of a selected communication channel with the first party, via which the establishing the acceptance of the document and/or the obtaining distinguishing information from said first party's is carried out.

In some examples, the distinguishing information received from the second party comprises a first code K1, and the distinguishing information received from the client includes information compatible with said first code K1.

In some examples, the method further comprising the step of establishing said first party's acceptance comprises: generating a second code K2, and sending it to said forst party via said selected communication channel or displaying it; and receiving from said first party a code K2' compatible with said second code K2.

In some examples, the selected communication channel includes at least one item from the following group: telephone of any kind, email, internet connection, and fax.

In some examples, the received details of a selected communication channel are combined with the distinguishing information received from the service provider.

In some examples, the securing of the certificate is performed using a digital signature or another cryptographic method.

In some examples, the securing of the certificate is performed by storing a copy of the certificate in a protected repository.

In some examples, the method further comprising the step of having the first party empower the intermediary to act on his behalf.

In some examples, the first party's acceptance is established using one or more of the following methods: via email; via a text message; verbally over the telephone; an automated IVR survey system; an Internet connection; by entering the information or indicating acceptance in the electronic contracting system's Website.

In some examples, instead of receiving distinguishing information from the first party or from the second party, the distinguishing information is received from a disinterested authentication service, which may also consist of the electronic contracting unit.

In some examples, a method carried out by an Intermediary, for enabling a first remote party ("client") to contract with a second remote party ("company"), comprising: receiving from the company the following information items: an electronic contract document, distinguishing information associated said client; enabling the client to inspect and/or edit said document; receiving from said client distinguishing information compatible with the distinguishing information received from the company; establishing said client's acceptance of said document's contents; generating a certificate comprising a representation of said document, and details of activities performed and information relating to the process, said details including part or all of said distinguishing information associated with the client, and of information relating to his acceptance of the document's contents; securing said certificate against potential forgery; sending said certificate to either or both the company and the client; where said Intermediary is a disinterested party which is neither associated with the company nor with the client.

In some examples, the step of establishing said client's acceptance comprises: generating a second code K2, and sending it to said client via said selected communication channel or displaying it; and receiving from said client a code K2' compatible with said second code K2.

In some examples, the method further comprising enabling the client to inspect and/or edit said document.

Figure 2 is a block diagram of an electronic contracting system 100 according to one embodiment of the present invention. System 100 may comprise a first communication device 110 and a second communication device 120, each of said first and second communication devices may be a Personal Computer, a portable computing device, a smart phone or any other computing and communication device known in the art.

According to one embodiment of the present invention, first communication device 110 may be associated with a first party such as a client and second communication device 120 may be associated with a second party, such as a company or any other service provider.

System 100 may further comprise an electronic contracting unit 130. Electronic contracting unit 130 may be associated with an intermediary, which is an objective entity, not related to any one of the first and second parties. According to some embodiments of the present invention, first communication device 110, second communication device 120 and electronic contracting unit 130 may be in active communication with one another, through a communication network 140 such as the Internet. It would be appreciated, however, that other or additional communication networks may be used, such as LAN and WAN. According to some embodiments, different communication devices 110, 120 and electronic contracting unit 130 may be connected to each other via different communication networks at different stages of the electronic contracting process (described with reference to Figs. 1A and 1B hereinabove) and/or between different communication devices 110, 120 and electronic contracting unit 130. For example, the communication between first communication device 110 and second communication device 120 may be through a telephone network while the communication between first communication device 110 and electronic contracting unit 130 may be through the Internet.

It would be appreciated by those skilled in the art that although Fig 2 illustrates one client (associated with communication device 110) and one service provider (associated with communication device 120), electronic contracting system 100 may include any number of clients and/or service providers (e.g., two thousand clients, ten service providers; four electronic contracting units etc.).

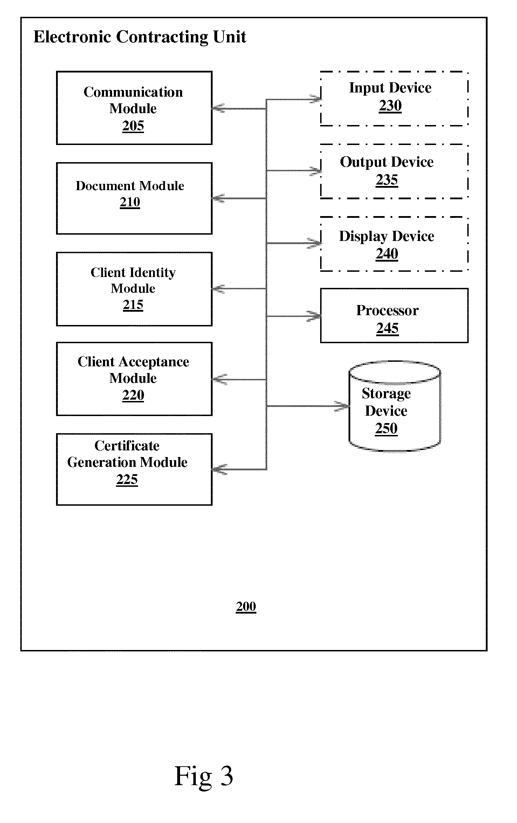

Figure 3 is a block diagram of an exemplary electronic contracting unit 200.

Electronic contracting unit may comprise a communication module 205, a document module 210, a client identity module 215, a client acceptance module 220, a certificate generation module 225, a processor 245 and a storage device 250. It would be appreciated by those skilled in the art that in some embodiments of the present invention not all of the modules above may be required.

According to some embodiments of the present invention, electronic contracting unit 200 may further comprise components such as an input device 230, an output device 235 and/or a display device 240. Communication module 205 may be adapted to communicate with at least one additional party, such as a client or a service provider. Communication module 205 may receive information from remote parties, direct the information to the relevant modules (e.g. client identity module 215), and transmit information received from other components of electronic contracting unit 200, such as from input device 230, storage device 250 and/or certificate generation module 225, to remote parties such as to a service provider and/or a client.

Document module 210 is adapted to receive documents to be accepted by the client and to present the document to the client upon request received from the client.

Client identity module 215 is adapted to receive identification information from client, compare received identification information with pre-obtained and pre-stored identification information associated to the same client, and verify the identity of the client.

Client acceptance module 220, may receive an indication from a client (e.g. through a keyboard or a mouse) that the document presented to the client, for example on a display of communication device 110 in Fig. 2, is accepted by the client. According to some embodiments of the present invention, when client identity module 215 provides a positive identification indication, and client acceptance module 220 receives an acceptance indication of the document associated with the client in document module 210, then certificate generation module 225, may generate a certificate of acceptance. An example of a certificate of acceptance is depicted in Fig. 6.

Any of the processes described herein can be, for example, performed by one or more of the components of electronic contracting unit 200. For example, the client identify module 215 verifies the identity of the client. As another example, the certificate generation module 225 generates the certificate. In some examples, unit 200 can include multiple components of each type, e.g. multiple input devices 230, multiple communication modules 205, each of communication modules may be adapted for different types of communication (e.g. Internet, telephone, email, fax, SMS text messaging etc.), The components can communicate with each other. For example, user information can be inputted by input device 230 or from communication module 205 and may be stored in storage device 250, as well as contract documents obtained from document module 210. In some examples, the modules can be combined or separated, e.g. communication module 205 may be combined in whole or in part with input device 230, document module 210 may be combined with storage unit 250 etc.

The modules and devices described with respect to Figure 3 can, for example, utilize processor 245 to execute computer executable instructions and/or include a processor to execute computer executable instructions (e.g., an encryption processing unit, a field programmable gate array processing unit, etc.). It should be understood that electronic contracting unit 200 may include, for example, other modules, devices, and/or processors known in the art and/or varieties of the illustrated modules, devices, and/or processors.

According to some embodiments of the present invention, communication module 205 communicates information to/from electronic contracting unit 200 and may, for example, include communication channels such as telephone, fax, internet connectivity, LAN, WAN connections etc. Input device 230 may receive information associated with electronic contracting unit 200 (e.g., instructions or input from a user, instructions from another computing device, etc.). According to some embodiments of the present invention, input device 230 may include, for example, a keyboard, mouse or communicate with the communication module 205 to receive information. It would be appreciated by those skilled in the art that other input devices 230 may be used.

Output device 235 outputs information associated with electronic contracting unit 200 (e.g., information to a printer (not shown), information to a display device 240, generated certificates to be sent via email etc.). According to some embodiments, input device 230 and output device 235 may include an Internet application for exchanging information to and from electronic contracting unit 200.

Display device 240 may display information associated with electronic contracting unit 200 (e.g., system management and status information, configuration information, error messages, etc.). Processor 245 may execute an operating system and/or any other computer executable instructions for the electronic contracting unit 200 (e.g., executes applications, etc.).

Storage device 250 may store identity information related to clients. Storage device 250 may further store any other information associated with electronic contracting unit 200 such as received documents, codes etc. According to some embodiments of the present invention, storage device 250 may include a plurality of storage sub-devices (not shown). Additionally or alternatively, electronic contracting unit 200 may include a plurality of storage devices 250 (e.g., a certificate storage device, a contract document storage device, an identity storage device, etc.). Storage device may include, for example, long-term storage (e.g., a hard drive, a tape storage device, flash memory, etc.), short-term storage (e.g., a random access memory, a graphics memory, etc.), and/or any other type of computer readable storage.

In some examples, the use of a particular component is optional. For example, a particular implementation can include part or all of the components described herein and/or part or all of any other component.

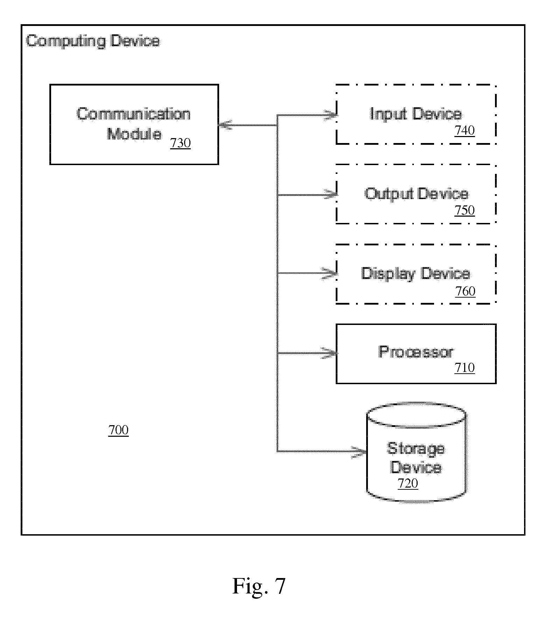

Reference is now made to Fig. 7 which is a block diagram of an exemplary computing device 700. The modules and devices described/depicted with respect to Fig. 7 may, for example, utilize a processor 710 to execute computer executable instructions and/or include a processor to execute computer executable instructions (e.g., an encryption processing unit, a field programmable gate array processing unit, etc.). It should be understood that the computing device can include, for example, other modules, devices, and/or processors known in the art and/or varieties of the illustrated modules, devices, and/or processors.

A communication module 730 may be adapted to communicate information to/from computing device 700. Computing device may further comprise at least one input device 740 to receive information associated with computing device 700 (e.g., instructions from a user, instructions from another computing device, etc.) from a user (not shown) and/or another computing system (not shown). Input device 740 may include, for example, a keyboard, a mouse, a scanner, etc. Computing device 700 may further comprise an output device 750 to output information associated with computing device 700 (e.g., information to a printer (not shown), information to a speaker, etc.).

According to some embodiments computing device 700 may comprise a display device 760 to display information associated with computing device 700 (e.g., status information, configuration information, etc.). Processor 710 may execute an operating system and/or any other computer executable instructions for computing device 700 (e.g., executes applications, etc.).

Computing device may further comprise a storage device 720 to store information and/or any other information associated with computing device 700. Storage device 720 can store information and/or any other data associated with computing device 700. Storage device 720 may include a plurality of storage devices and/or computing device 700 may include a plurality of storage devices. Storage device 720 may include, for example, long-term storage (e.g., a hard drive, a tape storage device, flash memory, etc.), short-term storage (e.g., a random access memory, a graphics memory, etc.), and/or any other type of computer readable storage.

The above-described systems and methods can be implemented in digital electronic circuitry, in computer hardware, firmware, and/or software. The implementation can be as a computer program product. The implementation can, for example, be in a machine-readable storage device, for execution by, or to control the operation of, data processing apparatus. The implementation can, for example, be a programmable processor, a computer, and/or multiple computers.

A computer program can be written in any form of programming language, including compiled and/or interpreted languages, and the computer program can be deployed in any form, including as a stand-alone program or as a subroutine, element, and/or other unit suitable for use in a computing environment. A computer program can be deployed to be executed on one computer or on multiple computers at one site.

Method steps according to embodiments of the present invention can be performed by one or more programmable processors executing a computer program to perform functions of the invention by operating on input data and generating output. Method steps can also be performed by and an apparatus can be implemented as special purpose logic circuitry. The circuitry can, for example, be a FPGA (field programmable gate array) and/or an ASIC (application-specific integrated circuit). Subroutines and software agents can refer to portions of the computer program, the processor, the special circuitry, software, and/or hardware that implement that functionality.

Processors suitable for the execution of a computer program include, by way of example, both general and special purpose microprocessors, and any one or more processors of any kind of digital computer. Generally, a processor receives instructions and data from a read-only memory or a random access memory or both. The essential elements of a computer are a processor for executing instructions and one or more memory devices for storing instructions and data. Generally, a computer can include, can be operatively coupled to receive data from and/or transfer data to one or more mass storage devices for storing data (e.g., magnetic, magneto-optical disks, or optical disks).

Data transmission and instructions can also occur over a communications network. Information carriers suitable for embodying computer program instructions and data include all forms of non-volatile memory, including by way of example semiconductor memory devices. The information carriers can, for example, be EPROM, EEPROM, flash memory devices, magnetic disks, internal hard disks, removable disks, magneto-optical disks, CD-ROM, and/or DVD-ROM disks. The processor and the memory can be supplemented by, and/or incorporated in special purpose logic circuitry.

To provide for interaction with a user, the above described techniques can be implemented on a computer having a display device. The display device can, for example, be a cathode ray tube (CRT) and/or a liquid crystal display (LCD) monitor. The interaction with a user can, for example, be a display of information to the user and a keyboard and a pointing device (e.g., a mouse or a trackball) by which the user can provide input to the computer (e.g., interact with a user interface element). Other kinds of devices can be used to provide for interaction with a user. Other devices can, for example, be feedback provided to the user in any form of sensory feedback (e.g., visual feedback, auditory feedback, or tactile feedback). Input from the user can, for example, be received in any form, including acoustic, speech, and/or tactile input.

The above described techniques can be implemented in a distributed computing system that includes a back-end component. The back-end component can, for example, be a data server, a middleware component, and/or an application server. The above described techniques can be implemented in a distributing computing system that includes a front-end component. The front-end component can, for example, be a client computer having a graphical user interface, a Web browser through which a user can interact with an example implementation, and/or other graphical user interfaces for a transmitting device. The components of the system can be interconnected by any form or medium of digital data communication (e.g., a communication network). Examples of communication networks include a local area network (LAN), a wide area network (WAN), the Internet, wired networks, and/or wireless networks.

The system can include clients and servers. A client and a server are generally remote from each other and typically interact through a communication network. The relationship of client and server arises by virtue of computer programs running on the respective computers and having a client-server relationship to each other.

Packet-based networks can include, for example, the Internet, a carrier internet protocol (IP) network (e.g., local area network (LAN), wide area network (WAN), campus area network (CAN), metropolitan area network (MAN), home area network (HAN)), a private IP network, an IP private branch exchange (IPBX), a wireless network (e.g., radio access network (RAN), 802.11 network, 802.16 network, general packet radio service (GPRS) network, HiperLAN), and/or other packet-based networks. Circuit-based networks can include, for example, the public switched telephone network (PSTN), a private branch exchange (PBX), a wireless network (e.g., RAN, bluetooth, code-division multiple access (CDMA) network, time division multiple access (TDMA) network, global system for mobile communications (GSM) network), and/or other circuit-based networks.

The transmitting device can include, for example, a computer, a computer with a browser device, a telephone, an IP phone, a mobile device (e.g., cellular phone, personal digital assistant (PDA) device, laptop computer, electronic mail device), and/or other communication devices. The browser device includes, for example, a computer (e.g., desktop computer, laptop computer) with a World Wide Web browser (e.g., Microsoft® Internet Explorer® available from Microsoft Corporation, Mozilla® Firefox available from Mozilla Corporation). The mobile computing device includes, for example, a Blackberry®, IPhone ® and other smartphones.

Comprise, include, and/or plural forms of each are open ended and include the listed parts and can include additional parts that are not listed. And/or is open ended and includes one or more of the listed parts and combinations of the listed parts.

One skilled in the art will realize the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A method carried out by an intermediary for establishing a remote electronic contract between a first party and a second party comprising:
receiving distinguishing information indicative of said first party's identity;
receiving a document;
establishing said first party acceptance of said document;
generating a certificate of acceptance; and
sending said certificate of acceptance to at least one of said first party and said second party.

2. The method of claim 1, wherein at least part of said distinguishing information is received from an entity having said first party registered as a member of said entity.

3. The method of claim 2, further comprising the step of receiving from said first party information compatible with said distinguishing information.

4. The method of claim 2, wherein said entity is selected from a group comprising: said second party, a financial institute, and a disinterested authentication service.

5. The method of claim 1 wherein at least part of said distinguishing information is generated by said intermediary and wherein said first party is registered as a member of said intermediary.

6. The method of claim 5 further comprising the step of receiving from said first party information compatible with said distinguishing information.

7. The method of claim 2, wherein said distinguishing information comprises a first code provided to said first party after positive identification of said first party.

8. The method according to claim 1 comprising authenticating the identity of said first party.

9. The method according to claim 1 wherein the step of establishing said client's acceptance comprises:
generating a second code;
sending said second code to said first party; and
receiving from said first party information compatible with said second code.

10. A remote electronic contracting system comprising:
at least a first communication device associated with a first party;
at least a second communication device associated with a second party; and
an electronic contracting unit;
wherein said at least first communication device, said at least second communication device and said electronic contracting unit are connectable through a network, and wherein said electronic contracting unit is adapted to receive at least one document and an acceptance indication of said document and generate a certificate of acceptance.

11. The system of claim 10 wherein said electronic contracting unit comprises:
an input device;
an output device;
a display device;
a processor;
a storage device;
a communication module adapted to receive information from at least one remote party and transmit information to at least another remote party;
a document module adapted to receive at least one document to be accepted by said first party and to present said at least one document to said first party upon request;
a client identity module adapted to receive distinguishing information from said first party, and validate it against pre-obtained and pre-stored distinguishing information indicative of said first party's identity, to verify the identity of said first party;
a client acceptance module adapted to receive an indication of acceptance of a document received at said document module; generate a code and sending said code via said communication module, to said first party;
a certificate generation module adapted to generate a certificate of acceptance and send said certificate to at least one remote party via said communication module.

12. A method carried out by an intermediary for authenticating a client comprising:
receiving distinguishing information indicative of the said first party's identity from an entity having said first party registered as a member of said entity;
receiving the details of a communication channel associated with said first party;
sending a second code to said first party via said communication channel; and
receiving information from said first party and validating that it is compatible with said second code.

13. The method of claim 12, further comprising:
providing said first party with a first code;
receiving information from said first party and validating that it is compatible with said first code.

14. The method of claim 13, wherein said first code is a part of said distinguishing information.

15. The method of claim 12, wherein said entity is a credible entity that is acquainted with said first party, and which is selected from a group comprising: a financial institute, a disinterested authentication service, and said intermediary.
